# EUROPEAN PATENT SPECIFICATION

(11) **EP 2 607 801 B1**
(45) Date of publication and mention of the grant of the patent: **06.05.2015**
(21) Application number: 12199280.4
(22) Date of filing: 21.12.2012
(51) Int. Cl.: F24F 7/06, F24D 5/08, F24H 3/08

(54) **Apparatus for irradiation heating and destratification of the ambient air**
Vorrichtung für die Bestrahlungserwärmung und Entschichtung von Umgebungsluft
Appareil de chauffage par irradiations et destratification de l'air ambiant

(30) Priority: 22.12.2011 IT PD20110406
(43) Date of publication of application: 26.06.2013
(73) Proprietor: Pallaro, Oscar, 35012 Camposampiero (PD) (IT)
(72) Inventor: Pallaro, Oscar, 35012 Camposampiero (PD) (IT)
(74) Representative: Gallo, Luca

(56) References cited:
- EP-A2- 1 992 874
- WO-A1-95/32399
- GB-A- 2 292 214
- JP-A- 63 061 825

## Description

### Field of application

The present invention regards an apparatus for irradiation heating and destratification of the ambient air, according to the preamble of the main independent claim.

The present apparatus is intended to be employed in industrial, commercial and agricultural areas as well as in processing cycles such as drying and desiccation.

In particular, it is suitable for being directly positioned inside the environments to be heated, but it can also be applied outside. The positioning and fixing are easy, same case applying to possible connections to systems for air renewal and expelling of combustion products if required.

### State of the art

As known, industrial, handicraft, agricultural and commercial spaces require the heating of the entire area; often, however, in case of need for the process cycle or productive layout, there instead arises the need to heat only limited zones. There also arises the need to ensure the quality of the internal air by performing air renewal operations, a correct distribution of the air, above all for the purpose of limiting the stratification and hence the upward thermal dispersions.

Various apparatuses for irradiation heating, referred to as "radiant tube modules" or "radiant strips", the latter for high thermal powers, usually positioned next to the cover of the area to be heated, and wall-mounted only in particular cases have been available in the market over the years. For example, patent document WO-95/32399-A discloses an apparatus according to the preamble of claim 1.

In practice, these apparatuses have the drawback of determining, in environments where they are installed and in specific operating conditions, an undesired stratification of the ambient air. In order to further reduce the stratification of the ambient air, it is known to usually employ the installation of ventilating apparatuses separated from the heating apparatuses, positioned at the top and known as "destratifiers". The insertion of other apparatuses in the environments, besides reducing the space that is useful for the production activity, requires further electrical connections as well as higher management and maintenance expenses.

A further drawback of the apparatuses for heating with radiant modules or radiant strips of known type lies in the fact that the burners employed thereby require their own system for supplying comburent air to the burner which is separated from the ventilation system for renewing the ambient air and which is also separated from the air flow of the destratification apparatuses, entailing a considerable increase of the structural complexity and hence the manufacturing, installation and maintenance costs.

### Presentation of the invention

Therefore, in such context, the main object of the present invention is to overcome the drawbacks of the prior art described above, having a single apparatus capable of simultaneously achieving the irradiation heating and the movement and destratification of the ambient air.

Further object of the present invention is to provide an apparatus for irradiation heating and destratification, equipped with a fan capable of simultaneously destratifying the ambient air and moving the air in the desired directions of the single areas to be heated as well as ensuring the sending of comburent air to the burner.

Further object of the present invention is to provide an apparatus for irradiation heating and destratification of the ambient air which can be connected in parallel with other similar apparatuses, without positioning restrictions, allowing the heating of only desired areas and allowing the movement of the air in the directions required by the thermal comfort needs or in the directions desired for achieving specific industrial process cycles.

### Brief description of the drawings

The technical characteristics of the finding, according to the proposed task and objects, can be clearly found in the contents of the claims indicated below and the advantages of the same will be more evident in the detailed description of an embodiment, according to the finding, illustrated as a non-limiting example in the attached drawings, wherein:

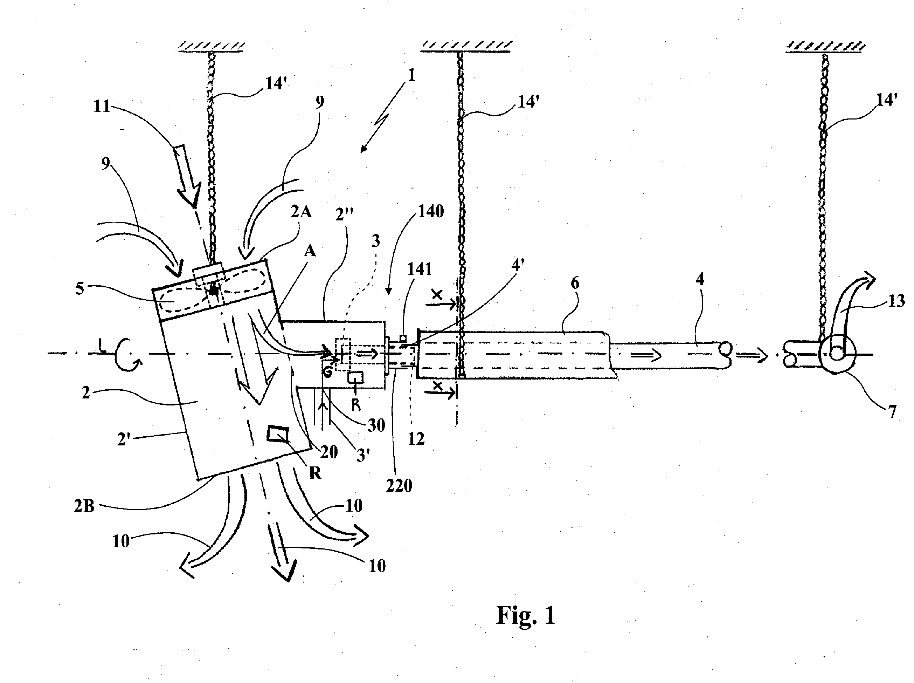

- fig. 1 represents a general view of an exemplifying and non-limiting embodiment of the apparatus for irradiation heating and destratification of the ambient air according to the present invention;

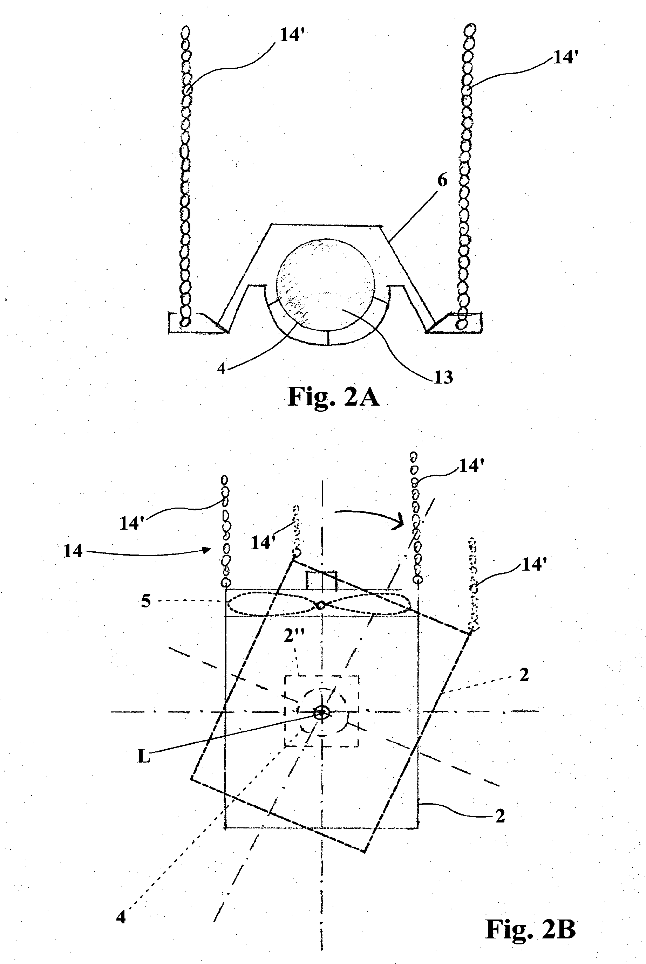

- fig. 2A represents a section of the radiant circuit with reflector screen and relative support system for the apparatus of figure 1;
- fig. 2B represents a front view of the apparatus of figure 1 having the possibility of being rotated on the axis L;
- fig. 3 is a general view of an exemplifying and non-limiting embodiment of the apparatus for irradiation heating and destratification of the ambient air according to the present invention in an installation in parallel with other similar apparatuses.

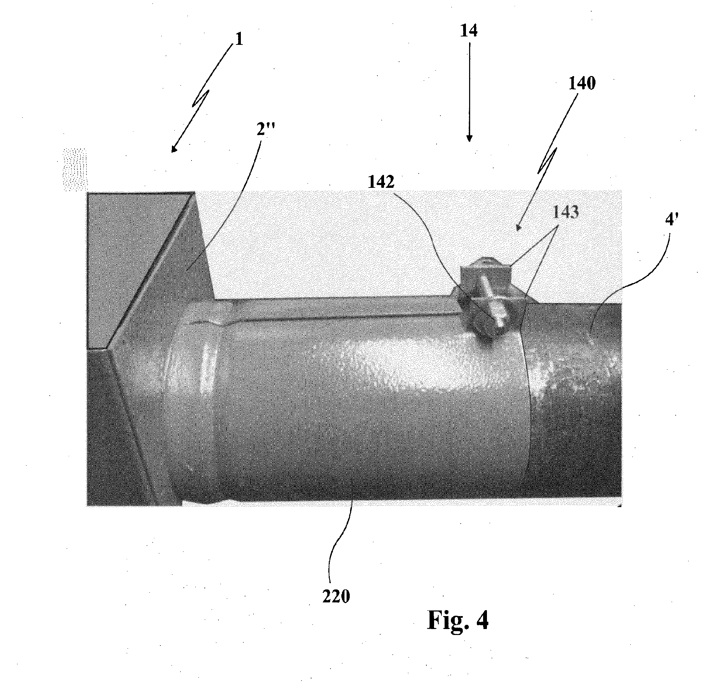

- fig. 4 shows a detail of the apparatus according to the invention relative to a circular seal coupling.

### Detailed description of a preferred embodiment

With reference to the attached drawings, an apparatus for irradiation heating and destratification of the ambient air in accordance with a preferred embodiment of the present invention is indicated in its entirety with reference number 1 .

It is intended to be mainly employed in the climate-control of environments in industrial, commercial and agricultural settings as well as in industrial process cycles such as drying and desiccation.

More in detail, the apparatus 1 comprises a containment duct 2, which is traversed by at least one ambient air flow 9 and a burner 3 fixed to the interior of the containment duct 2 and intended to burn a comburent mixture, obtained by combining a comburent air flow A derived from the ambient air flow 9, and a gas flow G, in order to generate combustion products 13 at high temperature.

The containment duct 2 is advantageously obtained by means of metallic plates, bent and/or welded in order to obtain the shape specified below and illustrated in the enclosed figures. The apparatus 1 also comprises a radiant tube circuit 4, connected to said containment duct 2 downstream of said burner 3 in order to convey therein the combustion products 13 at high temperature. The radiant tube circuit 4 is provided on the upper part thereof with a reflecting screen 6 in order to heat the surrounding environment by means of irradiation. According to the present invention, at least one fan 5 is also present, preferably only one fan, positioned inside the containment duct 2 and arranged upstream with respect to the burner 3, having the object of destratifying the ambient air by drawing generally hotter air from the top and partly directing downward and partly simultaneously supplying comburent air A to the burner 3.

Advantageously, the containment duct 2 also allows drawing fresh renewal air 11 from outside the environment to be heated.

More in detail, in accordance with the embodiment illustrated in the enclosed figures, the containment duct 2 has at least one upper opening 2A, for the suction from the top of an ambient air flow 9, or also for the suction of an external renewal air flow 11, and at least one lower opening 2B for the introduction of a destratified ambient air flow 10 further below in the environment.

The fan 5 is fixed to the interior of the containment duct 2 in vicinity to the upper opening 2A thereof.

Advantageously, the upper opening 2A and the lower opening 2B of the containment duct 2 are connected to each other by means of a first tubular body 2', which is extended between the aforesaid openings 2A, 2B preferably along an axis Y tilted with respect to the vertical direction.

The containment duct 2 also has a second tubular body 2", which is connected in derivation from the first tubular body 2' through a first opening 20 and supplies the burner 3 with a comburent air flow A drawn from the air flow sucked from the upper opening 2A of the containment duct 2 or formed by the ambient air 9 and possibly also by the external renewal air 11.

Therefore, the comburent air flow A, which supplies the burner 3, is a fraction of the flow that enters into the upper opening 2A of the first tubular body 2' of the containment duct 2 and can be constituted by ambient air 9 or preferably by a mixture of ambient air 9 and external renewal air 11.

The burner 3 is advantageously fixed inside the second tubular body 2" of the containment duct 2, e.g. by means of brackets (not represented).

The burner 3 is also connected to a duct 3' for conveying the combustible gas flow 3, which sealingly traverses a second opening 30 obtained on the second tubular body 2" of the containment duct 2.

The second tubular body 2" of the containment duct 2 is substantially axially aligned with an initial section 4' of the radiant tube circuit 4 along the common extension axis L, preferably substantially horizontal.

Advantageously, between the burner 3 and the radiant tube circuit 4, a combustion chamber 12 is present. The latter is extended inside the second tubular body 2" of the containment duct 2 or partly at least inside the first section 4' of the radiant tube circuit 4 and houses the flame of the burner 3 therewithin in order to generate the combustion products 13 at high temperature.

Support means 14 are provided for mechanically supporting, for example hung to the roof of a shed, the apparatus 1 subject of the present invention.

Such support means 14 are for example obtained with cables or chains 14' fixed at one end, at spaced positions, to the containment duct 2, and at the other end to the roof of the shed. Obviously, without departing from the protective scope of the present patent, the support means 14 can be obtained in numerous different modes well known to the man skilled in the art, e.g. comprising metallic brackets, structures and framework or tie rods, cables etc. In accordance with a preferred embodiment of the present invention, the containment duct 2 can rotate on the axis L of the second tubular body 2" thereof, or the initial section 4' of the radiant tube circuit 4, for the purpose of changing the direction of the air to be introduced into the environment to be heated by moving it, improving the destratification thereof and optimizing the environmental thermal comfort on the ground.

For such purpose, the support means 14 comprise rotatably support elements, such as hinges, bearings or couplings obtained with bands or similar systems, capable of rotatably supporting the containment duct 2, leaving it free to rotate around said axis L, or leaving it free to rotate only during adjustment, for example by loosening the band and then tightening it once the desired angular position has been found.

Advantageously, in order to allow the rotation of the containment body 2 with respect to the radiant tube circuit 4, the support means 14 provide for a circular seal coupling 140 between the free end of the second tubular body 2" of the containment duct 2 and the initial section 4' of the radiant tube circuit 4. Such circular seal coupling 140 is advantageously obtained, in accordance with the embodiment indicated in the attached , figures, by inserting, in the cylindrical-shaped free end of a terminal connector section 220 of the second tubular body 2", the free end of the initial section 4' of the radiant tube circuit 4, such free end also being cylindrical-shaped and with slightly smaller dimensions with respect to those of the terminal connector section 220 in order to allow the engagement in the latter of such initial section 4' of the radiant tube circuit 4.

Advantageously, once the relative angular position is defined between the two tubes and thus the angular position of the containment duct 2, rotatable with respect to an absolute reference represented by the radiant tube circuit 4, such position is maintained for example by means of a band or analogously by approaching - with a screw/bolt 142 - two opposite longitudinal strips 143 obtained by lifting two tabs longitudinally starting from the opening of the terminal connector section 220. The tensioning of the screw 142 allows slightly closing the section of such connector 220, bringing it sealingly on the initial section 4' of the radiant tube circuit 4 in the pre-selected angular position. The first tubular body 2' of the containment duct 2 can advantageously support the pre-selected angular position by adjusting the length of the support chains 14' connected thereto.

In accordance with a preferred embodiment of the present invention, there are provided means R for adjusting the flow of the comburent mixture A+G in order to vary the thermal power of the burner 3.

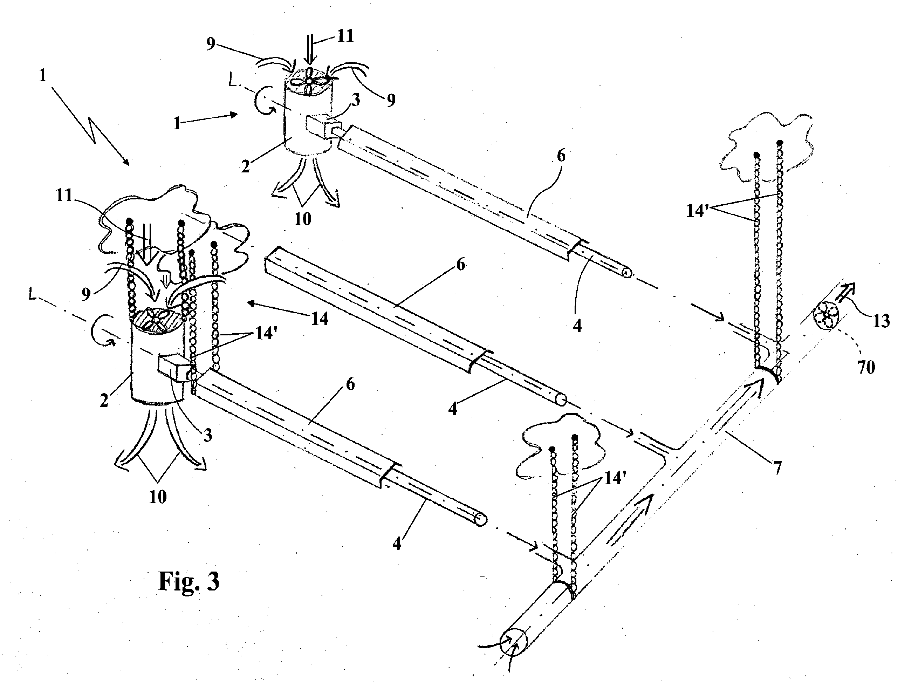

There are also provided safety and control means for the regular functioning of the burner 3 as a function of the correct comburent air flow A on the basis of differential values of pressure detectable on the containment duct 2 by means of suitable diagnostic means. In accordance with the embodiment illustrated in figure 3, the apparatus 1 can be equipped, downstream of the radiant tube circuit 4, with a collector 7, with or without aspirator 70, for the outward evacuation of the combustion products 13 if required.

Advantageously for a correct and rational heating of the environments, the apparatus 1 can be easily installed in parallel with other similar apparatuses, all connected with a same collector 7 equipped with aspirator 70 for the suction and forced evacuation of the combustion products produced by the aforesaid apparatuses 7. An electrical control and command panel manages the overall functioning of all the apparatuses.

## Claims

1. Apparatus for irradiation heating and destratification of the ambient air comprising :
- a containment duct (2) in which at least one ambient air flow (9) passes;
- a burner (3), fixed inside of the containment duct (2), intended to burn a comburent mixture (A+G), obtained with at least one comburent air flow (A) derived from the ambient air flow (A) and with at least one gas flow (G), for generating combustion products at high temperature (13);
- a radiant tube circuit (4) for heating the environments by means of irradiation, susceptible to convey said combustion products at high temperature (13) produced by said burner (3)
therewithin;
- support means (14) connected to said containment duct (2), **characterized in that** it comprises:
- at least one fan (5) arranged upstream with respect to said burner (3), positioned inside the containment duct (2), adapted to destratify the ambient air by drawing generally hot air from the top (9) and directing it downward (10) and simultaneously supplying said comburent air (A) to the burner (3).

2. Apparatus for irradiation heating and destratification of the ambient air, according to claim 1, **characterized in that** said containment duct (2) has at least one upper opening (2A), for suctioning said ambient air flow (9), and at least one lower opening (2B) for the introduction of a destratified ambient air flow (10) further below in the environment.

3. Apparatus for irradiation heating and destratification of the ambient air, according to claim 2, **characterized in that** said fan (5) is fixed inside said containment duct (2), in particular in the vicinity of said upper opening (2A) thereof.

4. Apparatus for irradiation heating and destratification of the ambient air, according to claim 2, **characterized in that** said containment duct (2) comprises a first tubular body (2'), which connects together said upper opening (2A) and lower opening (2B), and a second tubular body (2"), which is connected in derivation from the first tubular body (2') and supplies the burner (3) with said comburent air flow (A) drawn from that suctioned from the upper opening (2A) of the containment duct (2).

5. Apparatus for irradiation heating and destratification of the ambient air, according to claim 2, **characterized in that** said containment duct (2) is extended between the aforesaid openings (2A, 2B) along an axis (Y) that is vertical or tilted with respect to the vertical direction.

6. Apparatus for irradiation heating and destratification of the ambient air, according to claim 4, **characterized in that** said containment duct (2) is substantially axially aligned with an initial section (4') of said radiant tube circuit (4) along a common extension axis (L).

7. Apparatus for irradiation heating and destratification of the ambient air, according to claim 6, **characterized in that** said common extension axis (L) is substantially horizontal.

8. Apparatus for irradiation heating and destratification of the ambient air, according to any one of the preceding claims, **characterized in that** between said burner (3) and said radiant tube circuit (4), a combustion chamber (12) is present.

9. Apparatus for irradiation heating and destratification of the ambient air, according to any one of the preceding claims, **characterized in that** said containment duct (2) is susceptible to rotate around the extension axis of the initial section (4') of said radiant tube circuit (4) in order to change the direction of the air to be introduced into the environment to be heated.

10. Apparatus for irradiation heating and destratification of the ambient air, according to any one of the preceding claims, **characterized in that** it comprises means (R) for regulating the flow of the comburent mixture (A+G) in order to vary the thermal power of the burner (3).

11. Apparatus for irradiation heating and destratification of the ambient air, according to any one of the preceding claims, **characterized in that** the radiant tubes of said radiant tube circuit (4) are equipped on the upper part thereof with a reflecting screen (6).

## Patentansprüche

1. Vorrichtung für die Bestrahlungserwärmung und Entschichtung von Umgebungsluft, die Folgendes umfasst:
- eine Sicherheitsleitung (2), in der wenigstens ein Umgebungsluftfluss (9) strömt;
- einen im Inneren der Sicherheitsleitung (2) angebrachten Brenner (3), der dazu dient, eine Verbrennungsmittelmischung (A+G) zu verbrennen, die aus wenigstens einer aus dem Umgebungsluftfluss abgeleiteten Verbrennungsluftzufuhr (A) und wenigstens einer Gaszufuhr (G) stammt, um Verbrennungsprodukte bei hoher Temperatur (13) zu erzeugen;
- einen Strahlrohrkreis (4) zum Erwärmen von Umgebungen durch Bestrahlung, der geeignet ist, in seinem Inneren die von dem genannten Brenner (3) erzeugten genannten Verbrennungsprodukte bei hoher Temperatur (13) zu leiten;
- an der genannten Sicherheitsleitung (2) angebrachte Trägerelemente (14),
**dadurch gekennzeichnet, dass** sie Folgendes umfasst:
- wenigstens ein vor dem genannten Brenner (3) angeordnetes Gebläse (5), das im Inneren der Sicherheitsleitung (2) untergebracht und geeignet ist, die Umgebungsluft durch Entnahme von im Allgemeinen wärmerer Luft von oben (9) und Umleitung derselben nach unten (10) zu entschichten, wobei gleichzeitig die genannte Verbrennungsluft (A) an den Brenner (3) geleitet wird.

2. Vorrichtung für die Bestrahlungserwärmung und Entschichtung von Umgebungsluft nach Anspruch 1, **dadurch gekennzeichnet, dass** die genannte Sicherheitsleitung (2) mindestens eine oberen Öffnung (2A) zur Ansaugung des genannten Umgebungsluftstroms (9) aufweist und mindestens eine untere Öffnung (2B) zur Einleitung eines Flusses entschichteter Umgebungsluft (10) weiter unten.

3. Vorrichtung für die Bestrahlungserwärmung und Entschichtung von Umgebungsluft nach Anspruch 2, **dadurch gekennzeichnet, dass** das genannte Gebläse (5) im Inneren der genannten Sicherheitsleitung (2) angebracht ist, insbesondere in der Nähe seiner genannten oberen Öffnung (2A).

4. Vorrichtung für die Bestrahlungserwärmung und Entschichtung von Umgebungsluft nach Anspruch 2, **dadurch gekennzeichnet, dass** die genannte Sicherheitsleitung (2) einen ersten Rohrkörper (2') umfasst, der die genannte obere (2A) und untere (2B) Öffnung miteinander verbindet und einen zweiten Rohrkörper (2"), der als Abzweigung von dem ersten Rohrkörper (2') angeschlossen ist und den Brenner (3) mit dem genannten Verbrennungsluftstrom (A) versorgt, der aus der von der genannten oberen Öffnung (2A) der Sicherheitsleitung (2) angesaugten Luft entnommen wird.

5. Vorrichtung für die Bestrahlungserwärmung und Entschichtung von Umgebungsluft nach Anspruch 2, **dadurch gekennzeichnet, dass** die genannte Sicherheitsleitung (2) zwischen den oben genannten Öffnungen (2A, 2B) entlang einer vertikalen Achse (Y) oder im Verhältnis zur Vertikalrichtung geneigt verläuft.

6. Vorrichtung für die Bestrahlungserwärmung und Entschichtung von Umgebungsluft nach Anspruch 4, **dadurch gekennzeichnet, dass** die genannte Sicherheitsleitung (2) im Wesentlichen axial an einem Anfangsabschnitt (4') des genannten Strahlrohrkreises (4) entlang einer gemeinsamen Verlaufsachse (L) verläuft.

7. Vorrichtung für die Bestrahlungserwärmung und Entschichtung von Umgebungsluft nach Anspruch 6, **dadurch gekennzeichnet, dass** die genannte gemeinsame Verlaufsachse (L) im Wesentlichen horizontal ist.

8. Vorrichtung für die Bestrahlungserwärmung und Entschichtung von Umgebungsluft nach einem beliebigen der vorangegangenen Ansprüche, **dadurch gekennzeichnet, dass** sich zwischen dem genannten Brenner (3) und dem genannten Strahlrohrkreis (4) eine Verbrennungskammer (12) befindet.

9. Vorrichtung für die Bestrahlungserwärmung und Entschichtung von Umgebungsluft nach einem beliebigen der vorangegangenen Ansprüche, **dadurch gekennzeichnet, dass** die genannte Sicherheitsleitung (2) geeignet ist, um die Verlaufsachse des Anfangsabschnitts (4') des genannten Strahlrohrkreises (4) zu drehen, um die Richtung der in die zu erwärmende Umgebung einzuleitende Luft zu ändern.

10. Vorrichtung für die Bestrahlungserwärmung und Entschichtung von Umgebungsluft nach einem beliebigen der vorangegangenen Ansprüche, **dadurch gekennzeichnet, dass** sie Elemente (R) zum Regulieren des Durchflusses der Verbrennungsmischung (A+G) umfasst, um die thermische Leistung des Brenners (3) zu variieren.

11. Vorrichtung für die Bestrahlungserwärmung und Entschichtung von Umgebungsluft nach einem beliebigen der vorangegangenen Ansprüche, **dadurch gekennzeichnet, dass** die Strahlrohre des genannten Strahlrohrkeises (4) oben mit einem Reflektorschirm (6) ausgestattet sind.

## Revendications

1. Appareil de chauffage par irradiations et destratification de l'air ambiant, comprenant :
- un conduit de confinement (2) dans lequel passe au moins un flux d'air ambiant (9) ;
- un brûleur (3), fixé à l'intérieur du conduit de confinement (2), destiné à brûler un mélange comburant (A+G), obtenu par au moins un débit d'air comburant (A) dérivé du flux d'air ambiant (A) et par au moins un débit de gaz (G), pour générer des produits de combustion à haute température (13) ;
- un circuit de tuyaux radiants (4) pour chauffer les pièces par rayonnement, susceptible d'acheminer à son intérieur lesdits produits de combustion à haute température (13) produits par ledit brûleur (3) ;
- des moyens de transport (14) raccordés audit conduit de confinement (2),
**caractérisé en ce qu'**il comprend :
- au moins un ventilateur (5) positionné en amont par rapport audit brûleur (3), placé à l'intérieur du conduit de confinement (2), apte à destratifier l'air ambiant en prélevant de l'air, généralement plus chaude, par le haut (9) et en la dirigeant vers le bas (10) et, alimentant en même temps ledit air comburant (A) au brûleur (3).

2. Appareil de chauffage par irradiations et destratification de l'air ambiant, selon la revendication 1, **caractérisé en ce que** ledit conduit de confinement (2) présente au moins une ouverture supérieure (2A), pour l'aspiration dudit flux d'air ambiant (9), et au moins une ouverture inférieure (2B) pour l'injection plus en bas dans la pièce d'un flux d'air ambiant destratifié (10).

3. Appareil de chauffage par irradiations et destratification de l'air ambiant, selon la revendication 2, **caractérisé en ce que** ledit ventilateur (5) est fixé à l'intérieur dudit conduit de confinement (2), en particulier à proximité de ladite ouverture supérieure (2A).

4. Appareil de chauffage par irradiations et destratification de l'air ambiant, selon la revendication 2, **caractérisé en ce que** ledit conduit de confinement (2) comprend un premier corps tubulaire (2'), lequel relie entre elles lesdites ouverture supérieure (2A) et ouverture inférieure (2B), et un second corps tubulaire (2"), lequel est relié en dérivation du premier corps tubulaire (2') et alimente le brûleur (3) en ledit flux d'air comburant (A) prélevé de celui aspiré par l'ouverture supérieure (2A) du conduit de confinement (2).

5. Appareil de chauffage par irradiations et destratification de l'air ambiant, selon la revendication 2, **caractérisé en ce que** ledit conduit de confinement (2) s'étend entre lesdites ouvertures (2A, 2B) selon un axe (Y) vertical ou incliné par rapport à la direction verticale.

6. Appareil de chauffage par irradiations et destratification de l'air ambiant, selon la revendication 4, **caractérisé en ce que** ledit conduit de confinement (2) est essentiellement aligné axialement sur un tronçon initial (4') dudit circuit de tuyaux radiants (4) selon un axe de développement commun (L).

7. Appareil de chauffage par irradiations et destratification de l'air ambiant, selon la revendication 6, **caractérisé en ce que** ledit axe de développement commun (L) est essentiellement horizontal.

8. Appareil de chauffage par irradiations et destratification de l'air ambiant, selon une quelconque des revendications précédentes, **caractérisé en ce que** entre ledit brûleur (3) et ledit circuit de tuyaux radiants (4) est présente une chambre de combustion (12).

9. Appareil de chauffage par irradiations et destratification de l'air ambiant, selon une quelconque des revendications précédentes, **caractérisé en ce que** ledit conduit de confinement (2) est susceptible de tourner autour de l'axe de développement du tronçon initial (4') dudit circuit de tuyaux radiants (4) pour changer la direction de l'air à injecter dans la pièce à chauffer.

10. Appareil de chauffage par irradiations et destratification de l'air ambiant, selon une quelconque des revendications précédentes, **caractérisé en ce qu'**il comprend des moyens de réglage (R) du débit du mélange comburant (A+G) pour varier la puissance thermique du brûleur (3).

11. Appareil de chauffage par irradiations et destratification de l'air ambiant, selon une quelconque des revendications précédentes, **caractérisé en ce que** les tuyaux radiants dudit circuit de tuyaux radiants (4) sont dotés sur la partie supérieure d'un écran réfléchissant (6).
